# EUROPÄISCHE PATENTSCHRIFT

(11) **EP 0 401 463 B1**
(45) Veröffentlichungstag und Bekanntmachung des Hinweises auf die Patenterteilung: **12.05.1993**
(21) Anmeldenummer: 90101641.0
(22) Anmeldetag: 27.01.1990
(51) Int. Cl.: F16F 13/00, F16F 15/03, F16F 6/00

(54) **Gummilager mit hydraulischer Dämpfung**
Elastomeric mounting with hydraulic damping
Support en caoutchouc à amortissement hydraulique

(30) Priorität: 08.06.1989 DE 3918753
(43) Veröffentlichungstag der Anmeldung: 12.12.1990
(73) Patentinhaber: Firma Carl Freudenberg, 69469 Weinheim (DE)
(72) Erfinder: Freudenberg, Tillman, Dr., D-6940 Weinheim (DE); Freudenberg, Ulrich, Dr., D-6945 Hirschberg (DE)

(56) Entgegenhaltungen:
- EP-A- 0 163 162
- GB-A- 2 164 416
- GB-A- 2 166 516
- PATENT ABSTRACTS OF JAPAN vol. 6, no. 150 (M-148)(1028) 10 August 1982, & JP-A-57 69136 (YAKUMO KOGYO K.K.) 27 April 1982,

## Beschreibung

Die Erfindung betrifft ein Gummilager nach dem Oberbegriff von Anspruch 1.

Ein solches Gummilager ist aus der DE-A-34 19 437 bekannt. Das Magnetsystem umfaßt dabei eine Tauchspule, welche mit der Platte verbunden ist, sowie einen ringförmig gestalteten Permanentmagneten, der mit dem Gehäuse fest verbunden ist. Tauchspulen stellen üblicherweise geringe übertragbare Kräfte zur Verfügung, beispielsweise um in Lautsprechern Membrane mit großer Amplitude hin und her zu bewegen und die an die Membran angrenzende Luft in Schwingungen zu versetzen. Um eine Relativ-verlagerung der im Arbeitsraum enthaltenen Flüssigkeit zu bewirken, sind die übertragbaren Kräfte, die eine Tauchspule bereitstellt, jedoch zu gering, so daß nur eine beschränkte Anregung der Flüssigkeit erfolgen kann.

Der Erfindung liegt die Aufgabe zugrunde, ein solches Gummilager derart weiterzuentwickeln, daß sich eine Übertragung akustisch wirksamer Schwingungen über das Gummilager in einer wesentlich verbesserten Weise unterdrücken läßt.

Diese Aufgabe wird erfindungsgemäß bei einem Gummilager der eingangs genannten Art mit den kennzeichnenden Merkmalen von Anspruch 1 gelöst. Auf vorteilhafte Ausgestaltungen nehmen die Unteransprüche Bezug.

Bei dem erfindungsgemäßen Gummilager sind der Permanentmagnet und die Magnetspule relativ zueinander unbeweglich ausgebildet und dem Gehäuse des Gummilagers in starrer Weise zugeordnet, wobei der Permanentmagnet und die Magnetspule zusammen einen Hubmagneten bilden, der die Platte als magnetischen Rückschluß benutzt und wobei die Steifigkeit der Feder größer ist als diejenige der Blähfeder mit der Maßgabe, daß in jedem Betriebszustand ein Abstand zwischen dem Hubmagneten und der Platte vorhanden ist.Die Feder ist durch den Permanentmagneten vorgespannt und die Platte dem Permanentmagneten bis auf einen geringen Abstand angenähert. Die bei einer Aktivierung der Magnetspule erzielbare Bewegungsamplitude der Platte ist dementsprechend gering und von großen Kräften überlagert. Die in dem Arbeitsraum enthaltene Flüssigkeit läßt sich hierdurch in dem für die Kompensation akustisch wirksamer Schwingungen erforderlichen Maß in eine hin- und hergehende Relativbewegung versetzen, wodurch diese Schwingungen keine Druckänderungen in dem Arbeitsraum zur Folge haben und nicht mehr zu einer Änderung der Fundamentkräfte, d.h. einer Schwingungsübertragung, führen können. Zusätzlich ist das vorliegend zur Anwendung gelangende Magnetsystem besonders kostengünstig gestaltet insofern, als die Magnetspule und der Permanentmagnet baulich vereint und hierdurch einfach herstellbar und montierbar sind. Die Magnetspule ist fest gelagert, was die Anbringung der erforderlichen Stromzuführung wesentlich vereinfacht.

Während der bestimmungsgemäßen Verwendung erzeugt der Permanentmagnet einen statischen Fluß, der über den Luftspalt zwischen dem Spulenkörper und der Platte übertritt und der über die Platte geschlossen wird. An den Begrenzungsflächen des Luftspaltes entsteht eine mechanische Vorspannung, die zu einer Einfederung der Platte führt. Mit Hilfe der Spule wird dem statischen Fluß ein veränderlicher Fluß überlagert, so daß im Luftspalt ein Wechselanteil der Kraft entsteht. Durch diese Kraft wird die Platte aus ihrer zunächst vorhandenen Gleichgewichtslage ausgelenkt und angetrieben.

Die hierzu erforderliche Wechselspannung wird der Magnetspule aus einer Versorgungseinheit zugeführt, welche in starrer Weise oder unter Zuhilfenahme von Sensoren den zu isolierenden Schwingungen entsprechend gesteuert ist. Sie bildet keinen Bestandteil der vorliegenden Erfindung.

Hinsichtlich seines übrigen Aufbaues kann das erfindungsgemäße Gummilager irgendeiner der bekannten Bauformen entsprechen, bei denen der Arbeitsraum durch eine Dämpfungsöffnung mit einem Ausgleichsraum verbunden ist. Der Einbau sollte jedoch stets so erfolgen, daß der Hubmagnet derjenigen Seite des Gummilagers, in welche die zu isolierenden Schwingungen eingeleitet werden, in starrer Weise zugeordnet ist.

Der Permanentmagnet soll einen magnetischen Widerstand aufweisen, der wenigstens fünfmal so groß ist wie der magnetische Widerstand des durch den Abstand A gebildeten Spaltes 10. Hierdurch erhält das magnetische System nahezu lineare Eigenschaften, Magnetkraft und Strom sind zueinander proportional. Außerdem wird der Einfluß von Fertigungstoleranzen unterdrückt.

Der Permanentmagnet soll eine Energiedichte von wenigstens 100 kJ/m³ haben. Hierdurch wird erreicht, daß die Kräfte und Steifigkeiten im Magnetsystem die notwendigen hohen Werte erreichen.

Die in dem vorgeschlagenen Gummilager zur Anwendung gelangende Magnetspule soll eine Induktivität von höchstens 10 mH besitzen. Hierdurch bleibt der Wechselstromwiderstand der Spule im gesamten Frequenzbereich so klein, daß der die Wechselkraft erzeugende Strom nicht unter die erforderliche Stromstärke absinkt.

Der Hubmagnet kann weichmagnetische Teile besitzen, beispielsweise aus Siliziumeisen, wenn diese einen spezifischen elektrischen Widerstand von wenigstens 30 µΩ cm haben. Hierdurch wird erreicht, daß sich in diesen Teilen keine zu großen Wirbelströme bilden, die die Kraftwirkung behindern und Leistungsverluste in Form von Wärme mit sich bringen.

Die gleiche Forderung ist an die Ausbildung der Platte zu stellen. Auch sie soll einen spezifischen elektrischen Widerstand von wenigstens 30 µΩ cm haben, um Wirbelströme zu unterdrücken.

Die Platte soll eine Dicke haben, die so groß bemessen ist, daß die Sättigungsinduktion während der bestimmungsgemäßen Verwendung gerade nicht erreichbar ist. Hierdurch wird sichergestellt, daß die Platte den vollen möglichen Fluß von Spule und Permanentmagnet noch überträgt, aber andererseits auch keine unnötig hohe Masse besitzt.

Die Feder und die Kraftwirkung des Permanentmagneten können einander zu einer Gesamtfeder ergänzen mit einer Steifigkeit, die wenigstens doppelt so groß ist wie die Steifigkeit der Blähfeder. Hierdurch wird erreicht, daß die Übertragungseigenschaften des hydraulisch/gummielastischen Teils bei niedrigen Frequenzen und großen Amplituden kaum beeinflußt werden. Umgekehrt arbeitet auch das Magnetsystem nahezu unabhängig vom Betriebszustand des hydraulischen Systems.

Nach einer vorteilhaften Ausgestaltung ist es vorgesehen, daß die Platte eine Trägheitsmasse aufweist, die sich mit der Steifigkeit der Gesamtfeder zu einem schwingfähigen System ergänzt mit einer Resonanzfrequenz, die oberhalb der Frequenz der zu isolierenden Schwingungen liegt. Hierdurch ist gewährleistet, daß das Lager nicht im Bereich einer mechanischen Resonanz geregelt werden muß. Dies senkt die Anforderungen an die Stabilität der Parameter, die die Frequenzgänge von Phasenwinkeln und Amplituden bestimmen.

Zweckmäßigerweise soll die Platte eine Ersatzkolbenfläche F 1 haben, die wenigstens 0,5 mal so groß ist wie die Ersatzkolbenfläche F 2 des Tragkörpers einschließlich der Blähfeder. Dies kommt den Eigenschaften des Magnetsystems - kurzer Hub, große Kraft - entgegen. Außerdem werden parasitäre Trägheitswirkungen von Ausgleichsströmungen innerhalb des Arbeitsraumes vermieden. Zweckmäßigerweise hat die Platte eine Ersatzkolbenfläche F 1, welche 1,5 mal so groß ist wie die Ersatzkolbenfläche F 2 des Tragkörpers einschließlich der Blähfeder.

Zu der Magnetspule kann ein Kondensator parallel geschaltet sein. Hierdurch wird ein elektrischer Sperrkreis gebildet mit einer Resonanzfrequenz, die entweder im Frequenzbereich der zu isolierenden Schwingungen oder knapp darüber liegt. Im Bereich der Resonanz wird der für eine bestimmte Kraftamplitude notwendige Strom in der Zuleitung vermindert, da im wesentlichen nur noch Leistungsverluste ausgeglichen werden, während die mechanische Blindleistung aus dem Energieinhalt des Sperrkreises bestritten wird. Auch kann mit der Magnetspule ein Ohm'scher Widerstand in Reihe geschaltet sein. Hierdurch läßt sich erreichen, daß die Übertragungseigenschaften des Magnetsystens weniger stark von der Frequenz abhängen.

Das erfindungsgemäße Gummilager ermöglicht durch die spezielle Ausbildung des enthaltenen Magnetsystems eine gute Isolierung akustisch störender Schwingungen und insbesondere von Körperschall. Das parallel zu dem Magnetsystem vorhandene, hydraulische Dämpfungssystem ermöglicht zugleich eine Unterdrückung von resonanzüberhöhten Schwingungsausschlägen des gelagerten Maschinenteils von großer Amplitude. Das bevorzugte Anwendungsgebiet des erfindungsgemäßen Gummilagers ist aus diesem Grunde der Bereich der Lagerung von Verbrennungsmotoren in Kraftfahrzeugen.

Der Gegenstand der Erfindung wird nachfolgend anhand der als Anlage beigefügten Zeichnung weiter verdeutlicht. Es zeigen:
- Figur 1: ein Gummilager in längsgeschnittener Darstellung
- Figur 2: einen Ausschnitt aus dem in Figur 1 gezeigten Gummilager, der in vergrößerter Darstellung den Bereich des Magnetsystems wiedergibt.

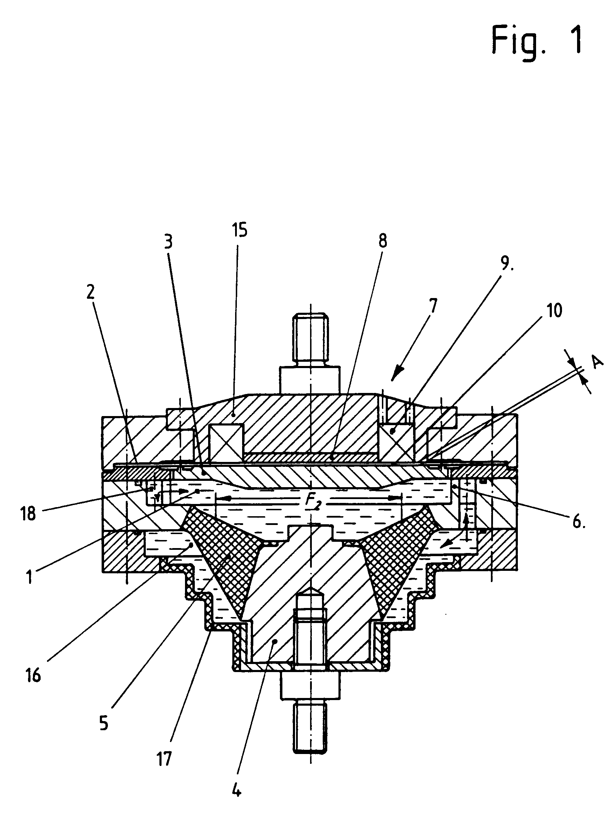

Das in Figur 1 gezeigte Gummilager ist zur Verwendung in einem Kraftfahrzeug bestimmt. Es umfaßt den Tragkörper 4, der während der bestimmungsgemäßen Verwendung mit der Karosserie des Kraftfahrzeuges verschraubt ist und der zugleich der Abstützung der hohlkegelig ausgebildeten, aus gummielastischem Werkstoff bestehenden Blähfeder 5 dient. Die Blähfeder 5 und der Tragkörper 4 einerseits sowie das Gehäuse 6 des Gummilagers andererseits sind unlösbar verbunden, beispielsweise durch unmittelbares Anvulkanisieren der Blähfeder 5 an die beiderseits angrenzenden, aus Metall bestehenden Maschinenteile. Das Gehäuse 6 ist unterseits in sich geschlossen und während der bestimmungsgemäßen Verwendung mit dem abzustützenden Verbrennungsmotor verbunden. Es enthält einen in senkrechter Richtung nach unten wirksamen Hubmagneten, der einerseits den Permanentmagneten 8 und andererseits die Magnetspule 9 umfaßt, welche in einer den Permanentmagneten 8 umschliessenden Nut des aus Weicheisen bestehenden Stützkörpers 15 starr gelagert ist.

Unterhalb des Stützkörpers 15 und des Permanentmagneten 8 ist im Bereich ihres Außenumfanges eine kreisringförmig gestaltete Blattfeder 2 gelagert, welche im Bereich ihres Innenumfanges die aus Weicheisen bestehende Platte 3 hintergreift und in Richtung des Permanetmagneten 8 und der Magnetspule 9 abstützt. Die Platte 3 und die Feder 2 sind flüssigkeitsdicht verbunden und die Elastizität der Feder 2 ist so mit der Haltekraft des Permanentmagneten 8 abgestimmt, daß sich bei der Aktivierung der Magnetspule 9 eine Behinderung der Relativbeweglichkeit der Platte 3 nicht ergibt. Die Platte 3 grenzt unterseits an den Arbeitsraum 1 an, der mit einer hydraulischen Flüssigkeit gefüllt ist und der in anderen Teilbereichen von dem Gehäuse 6, der Blähfeder 5 und dem Tragkörper 4 umschlossen ist. Der Arbeitsraum 1 ist durch die Dämpfungsöffnung 18 mit dem Ausgleichsraum 16 verbunden, welcher durch einen Faltenbalg 17 nach außen abgeschlossen und durch die große Flexibilität und Nachgiebigkeit des Faltenbalges 17 zur drucklosen Aufnahme zusätzlicher Flüssigkeitsvolumina geeignet ist. Das Aufbringen der während der bestimmungsgemäßen Verwendung zu tragenden Vorlast hat daher bei dieser Ausführung eines Gummilagers keinen Druckanstieg im Inneren des Arbeitsraumes zur Folge. Ausführungen, bei denen der Ausgleichsraum durch eine Wandung mit nennenswerter Elastizität nach außen abgeschlossen ist, sind jedoch ebenfalls denkbar. Die Dämpfungsöffnung 18 ist bei der gezeigten Ausführung in der Wandung des Gehäuses 6 angeordnet und kanalartig gestaltet. Ihr Querschnitt ist mit der Elastizität der Blähfeder 5 derart abgestimmt, daß sich bei Einleitung von Schwingungen einer zu dämpfenden Frequenz eine Resonanzbewegung des enthaltenen Flüssigkeitsvolumens ergibt und als Folge hiervon eine besonders gute Dämpfungswirkung. Das Auftreten von Schwingungsausschlägen des gelagerten Maschinenteiles von überhöhter Amplitude wird hierdurch unterbunden.

Zur Funktion ist folgendes auszuführen:

Bei Einleitung der während der bestimmungsgemäßen Verwendung zu isolierenden, akustisch störenden Schwingungen ergibt sich eine hin- und hergehende Relativverlagerung des Tragkörpers 4 in bezug auf das Gehäuse 6 des gezeigten Gummilagers. Die Blähfeder 5 ist im Bereich ihres Außenumfanges an dem Gehäuse festgelegt und im Bereich ihres Innenumfanges an dem Tragkörper 4. Sie vermag dadurch nicht in ihrer Gesamtheit den Relativbewegungen des Tragkörpers 4 oder des Gehäuses 6 zu folgen, sondern nur zu einem gewissen Anteil. Die sich ergebende Ersatzkolbenfläche, welche auf das im Arbeitsraum 1 enthaltene Flüssigkeitsvolumen einwirkt, wurde demgemäß in Figur 1 mit F 2 angedeutet.

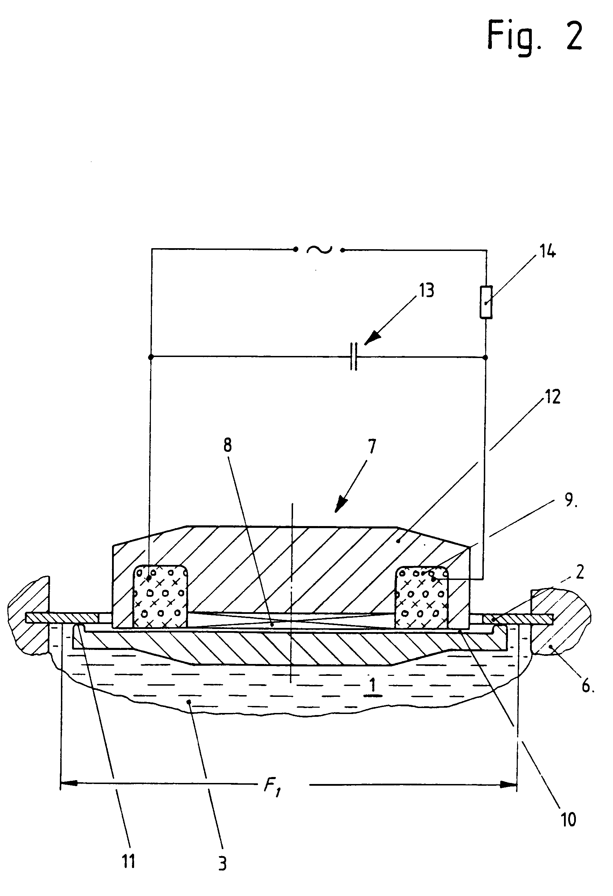

Die dem Tragkörper 4 und der Blähfeder 5 unmittelbar gegenüberliegende und durch das Magnetsystem 7 in eine hin-und hergehende Relativbewegung versetzbare Platte 3 ist von deutlich größerer Ausdehnung. Ihre Ersatzkolbenfläche wurde in Figur 2 eingetragen und mit F 1 bezeichnet. Sie gestattet, daß bei einer Relativverlagerung des Tragkörpers 4 von diesem und der anteiligen Blähfeder 5 verdrängte Flüssigkeitsvolumen durch eine vergleichsweise geringere Relativbewegung der Platte 3 zu kompensieren. In bezug auf die Kompensation von Druckänderungen, die auf der Einleitung von akustisch störenden Schwingungen und insbesondere auf der Einleitung von Körperschall beruhen, verbleibt daher die Platte 3 stets in einem Bereich, in dem der Permanentmagnet 8 und die Magnetspule 9 eine hochgradige Wirksamkeit entfalten können. Die Isolierung entsprechender Schwingungen gelingt hierdurch in dem Gummilager in einem bisher noch nicht erreichten Maße.

Die hierzu erforderliche Aktivierung der Magnetspule 9 kann auf die folgende Weise erfolgen, wobei dem Kondensator 13 und dem Ohm'schen Widerstand 14 die folgende Bedeutung zukommt:

An den Klemmen der Spule wird eine Wechselspannung angelegt, die den Strom in der Spule antreibt. Da der Wechselstromwiderstand der Spule mit zunehmender Frequenz wächst, darf die Induktivität der Spule nicht zu groß gewählt werden (L < 10 mH). Durch eine Beschaltung der Spule mit zusätzlichen passiven Bauelementen kann man die Frequenzabhängigkeit des Wechselstromwiderstandes beeinflussen. Ein Kondensator parallel zur Spule bildet mit dieser zusammen einen Sperrkreis. In der Umgebung der Resonanzfrequenz wird der Strombedarf in der Zuleitung gesenkt. Ein Ohm'scher Widerstand in Reihe mit der Spule vermindert die Frequenzabhängigkeit der Übertragungseigenschaften des Magnetsystems.

## Patentansprüche

1. Gummilager mit hydraulischer Dämpfung, bei dem ein flüssigkeitsgefüllter Arbeitsraum (1) in zumindest einem ersten Teilbereich durch eine auf einer Feder (2) abgestützten Platte (3) aus magnetisierbarem Werkstoff in zumindest einem zweiten Teilbereich durch einen Tragkörper (4) und eine ausbauchbare Blähfeder (5) aus gummielastischem Werkstoff und in zumindest einem dritten Teilbereich durch ein unnachgiebig gestaltetes Gehäuse (6) begrenzt ist, wobei die Platte (3) in Abhängigkeit von vorgegebenen Parametern mit Hilfe eines Magnetsystems in Richtung des Arbeitsraumes (1) hin- und herbewegbar ist und wobei das Magnetsystem einen Permanentmagneten (8) und eine Magnetspule (9) enthält, dadurch gekennzeichnet, daß der Parmanentmagnet (8) und die Magnetspule (9) relativ zueinander unbeweglich ausgebildet und dem Gehäuse (6) in starrer Weise zugeordnet sind, daß der Permanentmagnet (8) und die Magnetspule (9) zusammen einen Hubmagneten (7) bilden, der die Platte (3) als magnetischen Rückschluß benutzt und daß die Steifigkeit der Feder (2) gröber ist als diejenige der Blähfeder (5) mit der Maßgabe, daß in jedem Betriebszustand ein Abstand zwischen dem Hubmagneten (7) und der Platte (3) vorhanden ist.

2. Gummilager nach Anspruch 1, dadurch gekennzeichnet, daß der Permanentmagnet (8) einen magnetischen Widerstand aufweist, der wenigstens fünf mal so groß ist wie der magnetische Widerstand des durch den Abstand (A) gebildeten Spaltes (10).

3. Gummilager nach Anspruch 1 bis 2, dadurch gekennzeichnet, daß der Permanentmagnet (8) eine Energiedichte von wenigstens 100 kJ/m³ hat.

4. Gummilager nach Anspruch 1 bis 3, dadurch gekennzeichnet, daß die Magnetspule (9) eine Induktivität von höchstens 10 mH besitzt.

5. Gummilager nach Anspruch 1 bis 4, dadurch gekennzeichnet, daß der Hubmagnet (7) weichmagnetische Teile (12) besitzt und daß die Teile (12) einen spezifischen, elektrischen Widerstand von wenigstens 30 µΩcm haben.

6. Gummilager nach Anspruch 1 bis 5, dadurch gekennzeichnet, daß die Platte (3) einen spezifischen elektrischen Widerstand von wenigstens 30 µΩcm hat.

7. Gummilager nach Anspruch 1 bis 6, dadurch gekennzeichnet, daß die Platte (3) eine Dicke hat, die so groß bemessen ist, daß die Sättigungsinduktion während der bestimmungsgemäßen Verwendung nicht erreichbar ist.

8. Gummilager nach Anspruch 1 bis 7, dadurch gekennzeichnet, daß die Feder (2) und die Kraftwirkung des Permanentmagneten (8) einander zu einer Gesamtfeder ergänzen mit einer Gesamtsteifigkeit, die wenigstens doppelt so groß ist wie die Steifigkeit der Blähfeder (5).

9. Gummilager nach Anspruch 8, dadurch gekennzeichnet, daß die Platte (3) eine Trägheitsmasse aufweist, die sich mit der Gesamtsteifigkeit der Gesamtfeder zu einem schwingfähigen System ergänzt mit einer Resonanzfrequenz, die oberhalb der Frequenz der zu isolierenden Schwingungen liegt.

10. Gummilager nach Anspruch 1 bis 9, dadurch gekennzeichnet, daß die Platte (3) eine Ersatzkolbenfläche F 1 hat, die wenigstens 0,5 mal so groß ist wie die Ersatzkolbenfläche F 2 des Tragkörpers (4) einschließlich der Blähfeder (5).

11. Gummilager nach Anspruch 1 bis 10, dadurch gekennzeichnet, daß die Platte (3) eine Ersatzkolbenfläche F 1 hat, die wenigstens 1,5 mal so groß ist wie die Ersatzkolbenfläche F 2 des Tragkörpers (4) einschließlich der Blähfeder (5).

12. Gummilager nach Anspruch 1 bis 11, dadurch gekennzeichnet, daß zu der Magnetspule (9) ein Kondensator (13) elektrisch parallel geschaltet ist.

13. Gummilager nach Anspruch 1 bis 12, dadurch gekennzeichnet, daß mit der Magnetspule ein Ohm'scher Widerstand (14) elektrisch in Reihe geschaltet ist.

## Claims

1. A rubber mount with hydraulic damping, in which a fluid-filled operating space (1) is bounded in at least one first partial region by a plate (3) made of magnetisable material and supported on a spring (2), in at least one second partial region by a bearing body (4) and a bulgeable swelling spring (5) made of elastomeric material, and in at least one third partial region by a housing (6) of non-resilient design, the plate (3) being movable back and forth in the direction of the operating space (1) with the aid of a magnetic system as a function of predetermined parameters, and the magnetic system comprising a permanent magnet (8) and a magnet coil (9), characterised in that the permanent magnet (8) and the magnet coil (9) are constructed to be immobile relative to one another and are associated with the housing (6) in a rigid manner, in that the permanent magnet (8) and the magnet coil (9) together form a lifting magnet (7) which uses the plate (3) as magnetic return path, and in that the rigidity of the spring (2) is greater than that of the swelling spring (5) with the proviso that there is a spacing between the lifting magnet (7) and the plate (3) in every operating state.

2. A rubber mount according to claim 1, characterised in that the permanent magnet (8) has a magnetic resistance which is at least five times as large as the magnetic resistance of the gap (10) formed by the spacing (A).

3. A rubber mount according to either of claims 1 and 2, characterised in that the permanent magnet (8) has an energy density of at least 100 kJ.m³.

4. A rubber mount according to any of claims 1 to 3, characterised in that the magnet coil (9) has an inductance of at least 10 mH.

5. A rubber mount according to any of claims 1 to 4, characterised in that the lifting magnet (7) has low-retentivity parts (12), and in that the parts (12) have a specific electrical resistance of at least 30 µΩ cm.

6. A rubber mount according to any of claims 1 to 5, characterised in that the plate (3) has a specific electrical resistance of at least 30 µΩ cm.

7. A rubber mount according to any of claims 1 to 6, characterised in that the plate (3) has a thickness which is dimensioned to be of such a size that the saturation inductance cannot be reached during proper use.

8. A rubber mount according to any of claims 1 to 7, characterised in that the spring (2) and the power of the permanent magnet (8) complement one another to form an overall spring with an overall rigidity which is at least twice as large as the rigidity of the swelling spring (5).

9. A rubber mount according to claim 8, characterised in that the plate (3) has an inertial mass which is complemented by the overall rigidity of the overall spring to form a vibratable system having a resonance frequency which is above the frequency of the vibrations to be isolated.

10. A rubber mount according to any of claims 1 to 9, characterised in that the plate (3) has an equivalent piston area F 1 which is at least 0.5 times as large as the equivalent piston area F 2 of the bearing body (4) including the swelling spring (5).

11. A rubber mount according to any of claims 1 to 10, characterised in that the plate (3) has an equivalent piston area F 1 which is at least 1.5 times as large as the equivalent piston area F 2 of the bearing body (4) including the swelling spring (5).

12. A rubber mount according to any of claims 1 to 11, characterised in that a capacitor (13) is connected electrically in parallel with the magnet coil (9).

13. A rubber mount according to any of claims 1 to 12, characterised in that an ohmic resistor (14) is connected electrically in series with the magnet coil.

## Revendications

1. Support en caoutchouc avec amortissement hydraulique, dans lequel une chambre de travail (1) remplie de liquide est délimitée dans au moins une première zone partielle par une plaque (3) soutenue par un ressort (2) et constituée d'un matériau magnétisable, dans au moins une seconde zone partielle par un corps porteur (4) et un ressort d'expansion incurvable (5) formé d'un matériau ayant l'élasticité du caoutchouc, et dans au moins une troisième zone partielle par un carter (6) de structure inflexible, la plaque (3) étant déplaçable alternativement, en fonction de paramètres prédéterminés, à l'aide d'un système magnétique en direction de la chambre de travail (1) et le système magnétique comportant un aimant permanent (8) et une bobine magnétique (9), caractérisé en ce que l'aimant permanent (8) et la bobine magnétique (9) sont agencés de façon à ne pas se déplacer l'un par rapport à l'autre et sont associés au carter (6) d'une manière rigide, en ce que l'aimant permanent (8) et la bobine magnétique (9) constituent ensemble un électroaimant (7) qui utilise la plaque (3) comme retour de flux magnétique et en ce que la raideur du ressort (2) est plus grande que celle du ressort d'expansion (5), avec la particularité que, dans chaque condition de marche, il existe un espacement entre l'électroaimant (7) et la plaque (3).

2. Support en caoutchouc selon la revendication 1, caractérisé en ce que l'aimant permanent (8) a une résistance magnétique qui est au moins cinq fois aussi grande que la résistance magnétique de l'intervalle (10) créé par l'espacement (A).

3. Support en caoutchouc selon une des revendications 1 et 2, caractérisé en ce que l'aimant permanent (8) a une densité d'énergie d'au moins 100 kJ/m³.

4. Support en caoutchouc selon une des revendications 1 à 3, caractérisé en ce que la bobine magnétique (9) a une inductance au maximum de 10 mH.

5. Support en caoutchouc selon une des revendications 1 à 4, caractérisé en ce que l'électro-aimant (7) comporte des parties (12) à magnétisme doux et en ce que ces parties (12) ont une résistance électrique spécifique d'au moins 30µΩ cm.

6. Support en caoutchouc selon une des revendications 1 à 5, caractérisé en ce que la plaque (3) a une résistance électrique spécifique d'au moins 30µΩ cm.

7. Support en caoutchouc selon une des revendications 1 à 6, caractérisé en ce que la plaque (3) a une épaisseur qui a une dimension suffisamment grande pour que l'induction de saturation ne soit pas atteinte pendant l'utilisation conforme aux prescriptions.

8. Support en caoutchouc selon une des revendications 1 à 7, caractérisé en ce que le ressort (2) et la génération de force de l'aimant permanent (8) sont combinés mutuellement pour créer un ressort global ayant une raideur globale qui est au moins égale au double de la raideur du ressort d'expansion (5).

9. Support en caoutchouc selon la revendication 8, caractérisé en ce que la plaque (3) comporte une masse d'inertie qui se combine avec la raideur globale du ressort global pour créer un système pouvant vibrer ou osciller à une fréquence de résonance qui est supérieure à la fréquence des oscillations ou vibrations à isoler.

10. Support en caoutchouc selon une des revendications 1 à 9, caractérisé en ce que la plaque (3) comporte une surface formant piston F 1 qui a une grandeur au moins égale à 0,5 fois celle de la surface formant piston F 2 du corps porteur (4), y compris le ressort d'expansion (5).

11. Support en caoutchouc selon une des revendications 1 à 10, caractérisé en ce que la plaque (3) comporte une surface formant piston F 1 ayant une grandeur au moins égale à 1,5 fois celle de la surface formant piston F 2 du corps porteur (4), y compris le ressort d'expansion (5).

12. Support en caoutchouc selon une des revendications 1 à 11, caractérisé en ce qu'un condensateur (13) est connecté électriquement en parallèle à la bobine magnétique (9).

13. Support en caoutchouc selon une des revendications 1 à 12, caractérisé en ce qu'une résistance ohmique (14) est reliée électriquement en série avec la bobine magnétique.
